# EUROPÄISCHE PATENTSCHRIFT

(11) **EP 4 543 597 B1**
(45) Veröffentlichungstag und Bekanntmachung des Hinweises auf die Patenterteilung: **18.11.2026**
(21) Anmeldenummer: 23727229.9
(22) Anmeldetag: 22.05.2023
(51) Int. Cl.: B05B 1/00

(54) **SPRITZDÜSE MIT LAMINARER STRÖMUNGSCHARAKTERISTIK**
SPRAY NOZZLE WITH LAMINAR FLOW CHARACTERISTICS
BUSE DE PULVÉRISATION AVEC CARACTÉRISTIQUES D`ÉCOULEMENT LAMINAIRE

(30) Priorität: 21.06.2022 DE 102022206197
(43) Veröffentlichungstag der Anmeldung: 30.04.2025
(73) Patentinhaber: AUMOVIO Germany GmbH, 60488 Frankfurt am Main (DE)
(72) Erfinder: FEJFAR, Ota, 74401 Frenstat pod Radhosten (CZ)
(74) Vertreter: Aumovio Corporation
(86) Internationale Anmeldenummer: PCT/DE2023/200104
(87) Internationale Veröffentlichungsnummer: WO 2023/246988

(56) Entgegenhaltungen:
- WO-A1-2011/014607
- CN-A- 110 801 950
- CN-A- 110 801 951

## Beschreibung

Die vorliegende Erfindung betrifft eine Spritzdüse gemäß dem Oberbegriff des Anspruchs 1.

Zum Reinigen von optischen Oberflächen im Außenbereich eines Fahrzeugs (beispielsweise Glasscheiben, Scheinwerfer, Kameralinsen und Dergleichen) wird üblicherweise aus einer oder mehreren Spritzdüsen einer fahrzeuginternen Reinigungsvorrichtung unter Druck eine Reinigungsflüssigkeit in Form eines Sprühstrahls auf die entsprechende Oberfläche versprüht. Man ist dabei stets bestrebt, den begrenzten Vorrat von Reinigungsflüssigkeit möglichst effizient einzusetzen, zugleich soll die Reinigungsvorrichtung idealerweise unter allen Betriebsbedingungen zuverlässig konstante Reinigungsergebnisse gewährleisten. Es hat sich etabliert, dass der Sprühstrahl in einem Kanal in einem gesonderten Düsenkörper geformt wird, welcher in ein Gehäuse der Spritzdüse eingesetzt ist. Die veralteten Lösungen mit kreisrunden geraden Kanälen, sogenannte Punktdüsen, erzeugen einen Sprühstrahl mit einem kreisrunden Querschnitt, welcher insbesondere für gestreckte Oberflächen wie beispielsweise Windschutzscheiben sich als wenig effizient erweist. Es wurden daher Düsenkörper mit sogenannten fuldischen Oszillatoren mit einem sehr komplex geformten Oszillatorkanal entwickelt, wo durch eine geschickte Ausnutzung von Druckpulsationen und Turbulenzen ein in einer Ebene selbsttätig oszillierender beziehungsweise verschwenkbarer Sprühstrahl geformt wird, welche eine langgestreckte Fläche benetzen kann. Zum relevanten Stand der Technik wird beispielsweise auf WO 2006049622 A1 bzw. CN1 10801950 verwiesen.

Sprühbilder solcher in der Ebene oszillierenden Sprühstrahlen sind jedoch vergleichsweise flach beziehungsweise schmal, zudem ist die kinetische Energie solcher turbulenter Sprühstrahlen reduziert, wodurch hartnäckige Verschmutzungen nicht so effektiv entfernt werden. Für eine optimale Reinigung größerer Flächen ist es daher bekannt, solche Oszillatoren mit weiteren, beispielsweise Punktdüsen zu kombinieren oder auch mehrere in verschiedenen Ebenen ausgerichtete Oszillatorkanäle in einer Spritzdüse einzusetzen, wie aus DE 102005038292 A1 bekannt. Derartige Lösungen verursachen jedoch höhere Herstellkosten und benötigen größeren Bauraum.

Des Weiteren reagieren solche Oszillatoren konstruktionsbedingt empfindlich auf Kälte, wenn sich die Viskosität von Reinigungsflüssigkeit erhöht und dies die komplexen Strömungsverhältnisse im Inneren und als Folge den resultierenden Sprühstrahl zum Teil erheblich negativ beeinflusst.

Es stellt sich somit die Aufgabe der Erfindung eine verbesserte Spritzdüse vorzuschlagen, welche bei einem vereinfachten Aufbau stabile und effektive Reinigungsergebnisse in einem weiten Temperaturbereich auf effiziente Weise ermöglicht.

Die Aufgabe wird endungsgemäß durch eine Spritzdüse mit der Merkmalskombination nach Anspruch 1 gelöst.

Weitere Ausführungen und Weiterbildungen ergeben sich aus den Unteransprüchen zusammen mit der Beschreibung.

Die Erfindung sieht vor, dass ein den Düsenkörper durchgreifender der Kanal vollständig oder zumindest in seinem der Auslassöffnung angrenzendem Abschnitt schraubenförmig gedreht ausgebildet ist. Ein dadurch in der Strömung im Kanal erzeugter Rotationsmoment ermöglicht eine Ausbreitung eines Sprühstrahls mit einer laminaren Strömungscharakteristik, und einem Sprühbild beziehungsweise Querschnitt, welcher den Kanalquerschnitt skaliert abbildet.

Nachfolgend wird die Erfindung und ihre weiteren Vorteile anhand mehrerer Figurenbeschreibungen näher erläutert. Hierbei zeigen:
Fig.1 eine stark vereinfachte Darstellung einer gattungsgemäßen Spritzdüse.
Fig.2 eine bevorzugte Ausführungsform des Düsenkörpers in einer räumlichen Darstellung und in einem Längsschnitt.
Fig.3 den Aufbau eines Kanals gemäß Ausführung nach Fig.2.
Fig.4 Formung und charakteristische Eigenschaften eines durch den Kanal gemäß Fig.2&3 erzeugten Sprühstrahls.
Fig.5 Verdrehung des Sprühstrahls relativ zur Auslassöffnung.
Fig.6 Hilfestellung für Berechnung des Ausbreitungswinkels des Sprühstrahls.

Fig. 1

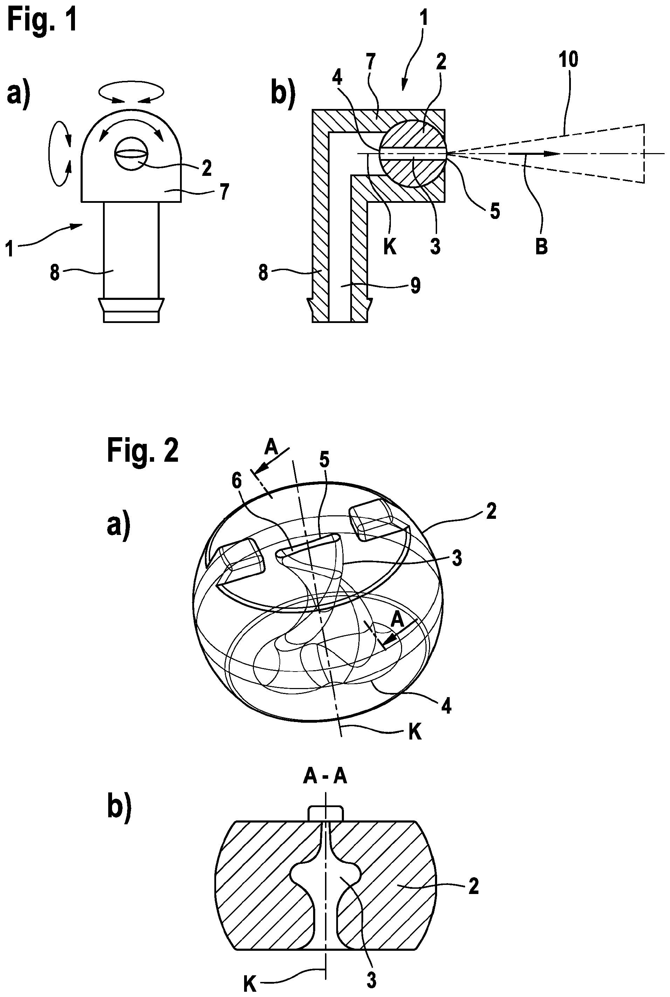

Fig.1 zeigt stark vereinfacht eine Spritzdüse 1, welche insbesondere in Reinigungsvorrichtungen in Fahrzeugen eingesetzt sind, beispielsweise zum Reinigen von Frontscheiben, in Frontansicht (Fig.1a) sowie im Längsschnitt (Fig.1b).

In einem Gehäuse 7 ist ein Düsenkörper 2 mit einem Kanal 3 angeordnet. Der Kanal 3 erstreckt sich zwischen einer Einlassöffnung 4 und einer Auslassöffnung 5 durch den gesamten Düsenkörper 2. Über einen Zulauf 9 wird unter Druck ein Reinigungsfluid zugeleitet, beispielsweise eine Reinigungsflüssigkeit. Diese tritt die Einlassöffnung 5 in den Kanal 3 ein, durchströmt diesen und wird aus der Auslassöffnung 5 in Form eines Sprühstrahls 10 in Sprührichtung B ausgestoßen. In der dargestellten Ausführung verläuft der Kanal 3 entlang einer Kanalachse K, welche auch der Sprührichtung B entspricht, beziehungsweise zu dieser parallel ist.

In der hier dargestellten Ausführung ist der Zulauf 9 in einem Anschlussstutzen 8 zum Anschließen einer hier nicht gezeigten Zuleitung ausgebildet. Andere konstruktive Lösungen für das zuführen von Reinigungsfluid zur Einlassöffnung 4 bleiben innerhalb der Erfindung jedoch ebenso zulässig.

Grundsätzlich es auch vorstellbar, dass die Kanalachse K nicht wie dargestellt durchgängig linear ist, sondern einen davon abweichenden Verlauf aufweisen kann, beispielsweise L-förmig gestaltet ist. Es ist jedoch wichtig, dass die Kanalachse K zumindest in einem der Auslassöffnung 5 angrenzenden Abschnitt einen linearen Verlauf aufweist, idealerweise orthogonal zu einer gedachten, durch den Rand der Auslassöffnung 5 aufgespannten Fläche.

Gemäß dem hier dargestellten bevorzugten Ausführungsprinzip ist der Düsenkörper 2 im Gehäuse 7 in einem Aufnahmesitz mit kugeligen korrespondierenden Dicht- und Kontaktflächen angeordnet, so dass der Düsenkörper 2 relativ zum Gehäuse 7 um alle drei Raumachsen, nämlich Hochachse, Querachse und Längsachse verstellt werden kann.

Abweichende Lagerungslösungen für den Düsenkörper 2 bleiben innerhalb der Erfindung zulässig, ebenso die Möglichkeit, den Düsenkörper 2 einteilig mit dem Gehäuse 7 auszubilden.

Fig.2
Fig.2 zeigt eine bevorzugte, verstellungsoptimiert kugelige Ausführungsform eines erfindungsgemäßen Düsenkörpers 2 in einer durchsichtigen räumlichen Darstellung (Fig.2a) sowie in einem Längsschnitt durch die Kanalachse K (Fig.2b).

Der Kanal 3 dreht beziehungsweise windet sich schraubenförmig in seinem Verlauf durch den Düsenkörper 2 und verjüngt sich dabei kontinuierlich. Damit ist gemeint, dass der Kanalquerschnitt 6 sich entlang des Kanalverlaufs um die Kanalachse K dreht, welche stets durch die Mitte des Kanalquerschnitts 6 verläuft, wobei der Kanalquerschnitt 6 beziehungsweise seine Fläche sich entlang des Verlaufs kontinuierlich sowie proportional verkleinert. Nachfolgend wird auf diesen Sachverhalt genauer eingegangen.

Bei der dargestellten Ausführung ist eine Drehung im Uhrzeigersinn realisiert. Ein gegenläufiger Drehsehen wäre jedoch genauso möglich.

Fig.3

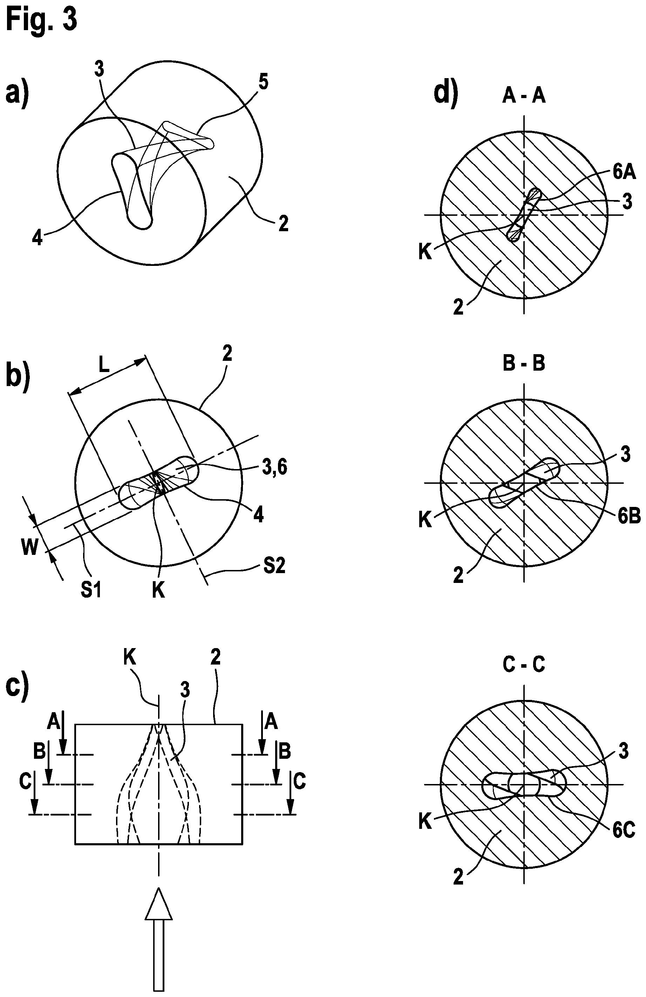

Fig. 3 verdeutlicht den Kanalverlauf durch den hier nur vereinfacht dargestellten Düsenkörper 2.
aus der Ansicht Fig.3a ist es erkennbar, dass die Auslassöffnung 5 gegenüber der Einlassöffnung 4 deutlich im Uhrzeigersinn verdreht ausgebildet ist. Dieser Sachverhalt lässt sich insbesondere aus der Ansicht Fig.3c und den zugehörigen Querschnitten in der Ansicht Fig.3d nachvollziehen.

Ansicht Fig.3b zeigt der Rückseite des Düsenkörpers 2 mit der Einlassöffnung 4 in der Mitte. Der Kanalquerschnitt 6 des Kanals 3 ist im abgebildeten, besonderes für Windschutzscheiben optimierten Ausführungsbeispiel eckenlos, verrundet sowie langgestreckt mit einer definierten Querschnittsbreite L und einer definierten Querschnittshöhe W ausgebildet. Die Querschnittsbreite L ist dabei signifikant größer als die Querschnittshöhe W. Darüber hinaus ist der Kanalquerschnitt 6 symmetrisch zu zwei orthogonalen Symmetrieachsen S1, S2 gestaltet, welche sich an der Kanalachse K kreuzen. Die Vermeidung von Ecken im Kanalquerschnitt 6 trägt in einem hohen Maße zu Reduzierung von Strömungsverlusten bei. Ein derartiger Querschnitt in Form eines eingedruckten Ovals entspricht annähernd beispielsweise einer Cassinischen Kurve oder einem Lamésches Oval.

Ansicht Fig.3c zeigt den Grundkörper 2 in Draufsicht mit den angedeuteten Serien-Querschnitten A, B und C. Der Pfeil zeigt dabei die Strömungsrichtung des Reinigungsfluids.

Aus den Querschnitten der Ansicht 3d ist klar erkennbar, dass sich die Winkelposition sowie die Größe des Kanalquerschnitts 6 an verschiedenen Stellen (6A, 6B, 6C) anders sind.

Es ist eindeutig erkennbar, dass die Einlassöffnung 4 deutlich größer als die Auslassöffnung 5 ist und der Kanalquerschnitt 6 sich zwischen den beiden Öffnungen stetig verringert. Dadurch funktioniert der Kanal 3 als ein Konfusor, welcher die Strömungsgeschwindigkeit und dadurch auch die kinetische Energie des ausgestoßenen Sprühstrahls 10 erhöht. Als Folge werden Reichweite und Reinigungseffizienz verbessert und der Einfluss von Fahrtwind reduziert.

Hierbei verändert sich das Profil des Kanalquerschnitts 6 entlang seines Verlaufs trotz Drehung um die Kanalachse K nicht und wird lediglich skaliert. Die Das Profil der Auslassöffnung 5 entspricht somit dem verkleinerten Profil der Einlassöffnung 4 und generell dem Profil des Kanalquerschnitts 6.

Die Erfindung bleibt nicht beschränkt auf eine Skalierung des Profils des Kanalquerschnitts 6 entlang des Kanalverlaufs. Es ist ebenso möglich, in weiteren hier nicht explizit dargestellten Ausführungen, dass das Verhältnis von Querschnittshöhe zu Querschnittsbreite W/L an der Einlassöffnung 4 größer ist als an der Auslassöffnung 5, wobei die Fläche des Kanalquerschnitts 6 von der Einlassöffnung 4 hin zur Auslassöffnung 5 stetig abnimmt. Die Wirkung als Konfusor bleibt bei einem solchen Kanal 3 erhalten, wobei Druckverluste und Strömungswiderstand im Vergleich zu der dargestellten Ausführung aufgrund geringerer Abflachung im Einlaufbereich sogar kleiner ausfallen.

Es ist zudem naheliegend, dass die Einlassöffnung 5 für Optimierung der Strömung ohne scharfe Kanten und stattdessen mit einem verrundeten oder trichterförmig gestalteten Einmündungsbereich gestaltet werden kann, wie es beispielsweise in der Fig.2 dargestellt ist.

Ein Düsenkörper 2 für Reinigungsanlagen wird üblicherweise aus einem thermoplastischen Kunststoff im Spritzgussverfahren in einem entsprechenden Spritzgusswerkzeug hergestellt. Die Verjüngung des Kanals 3 entlang seines Verlaufs vereinfacht ebenso die Herstellung des Düsenkörpers 2, weil sie als eine Art Entformungsschräge fungiert und Entnahme des Düsenkörpers aus dem Spritzgusswerkzeuge vereinfacht.

Fig.4

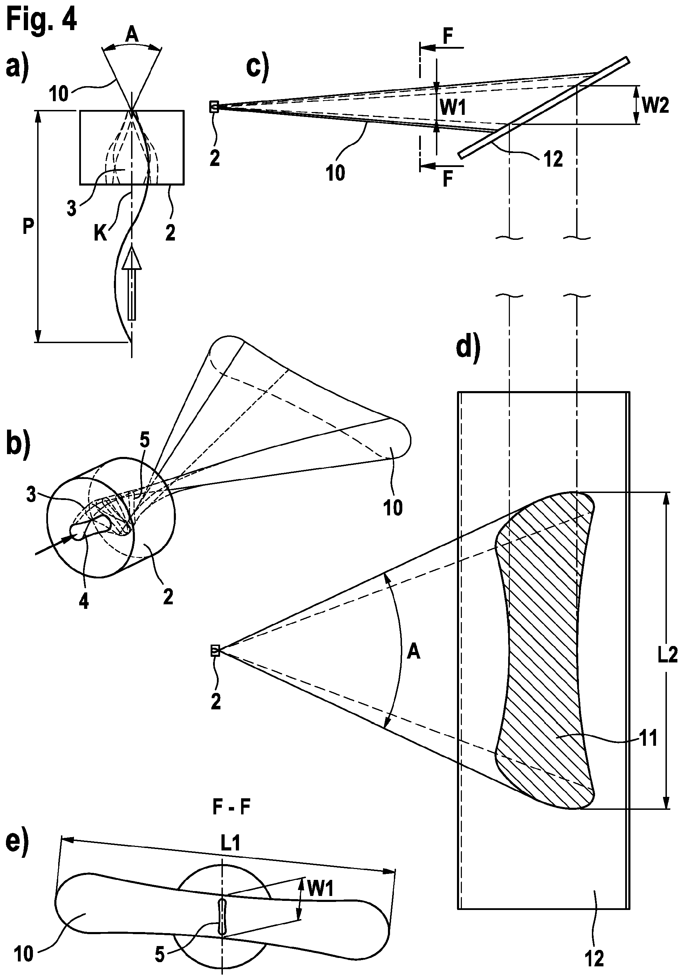

Die Fig.4 verdeutlicht das Formen, beziehungsweise den Einfluss des schraubenförmigen Kanals 3 auf den Sprühstrahl 10. der Düsenkörper 2 ist dabei genauso wie in der Fig.3 vereinfacht sowie transpatent dargestellt.

Ansicht Fig.4a zeigt eine Draufsicht auf den Düsenkörper 2, der Pfeil verdeutlicht die Strömungsrichtung des zufuhrbaren Reinigungsfluids

Eine Strecke, welche für eine vollständige Windung beziehungsweise Drehung des Kanalquerschnitts 6 um 360° benötigt wird, entspricht einer Steigung P. Der Kanalquerschnitt 6 muss nicht zwangsweise eine vollständige Windung entlang des Kanalverlaufs ausführen. Von praktischer Relevanz ist von einer Gesamtverdrehung des Kanalquerschnitt 6 zwischen 90 und etwa 180° auszugehen, wobei abweichende Werte innerhalb der Erfindung verständlich weiterhin zulässig bleiben.

Ansicht Fig.4b visualisiert die Entstehung des Sprühstrahls 10.

Das Reinigungsfluid tritt unter Druck durch die Einlassöffnung 4 in den Kanal 3 ein und durchströmt es als eine laminare Strömung. Durch die schraubenförmig um die Kanalachse K drehend ausgebildete Form des Kanals 6 bekommt die Strömung darin zusätzlich zu translatorischen eine rotatorische Richtungskomponente. Das Reinigungsfluid verlässt den Kanal 3 durch die Auslassöffnung 5, wobei die Richtung an jedem Punkt der Auslassöffnung 5 tangential zur momentanen Strömungsrichtung des Reinigungsfluids ist. Dies führt zur Bildung eines sich konstant mit einem Ausbreitungswinkel A ausbreitenden Sprühstrahls 10. Die laminare Strömungscharakteristik wird dabei beibehalten.

Wie bereits vorstehend angedeutet, bleibt das Verhältnis von Querschnittshöhe W zu Querschnittsbreite L entlang des gesamten schraubenförmig gedrehten Kanals 3 konstant

Ansicht Fig.4c zeigt die Seitenansicht des auf eine Oberfläche 12 aufprallenden Sprühstrahls 10 und die Ansicht Fig.4d eine entsprechende Draufsicht. Man beachte, dass mit dem beschriebenen Profil des Kanalquerschnitts 6 der benetzte Aufprallbereich 11 auf der Oberfläche 12 eine für eine Windschutzscheibe sehr günstige Form hat. Bei einer entsprechenden Auslegung wäre daher bereits eine einzige erfindungsgemäße Sprühdüse ausreichend, um eine gesamte Windschutzscheibe zu reinigen, wodurch Kosten und Montageaufwand einer Reinigungsvorrichtung signifikant reduziert würden.

Ansicht Fig.4e zeigt eine senkrechte Frontalansicht auf den Kanalquerschnitt 6 kurz vor dem Auftreffen auf die Oberfläche 12. Aufgrund der laminaren Strömungscharakteristik bleiben alle zueinander beabstandeten Querschnitte sowohl im Kanal 3 als auch im Sprühstrahl 10 zueinander proportional, und entsprechen einander in skalierter Form. Es gilt jederzeit: $\frac{W}{L} = \frac{W 1}{L 1} = \frac{W 2}{L 2}$

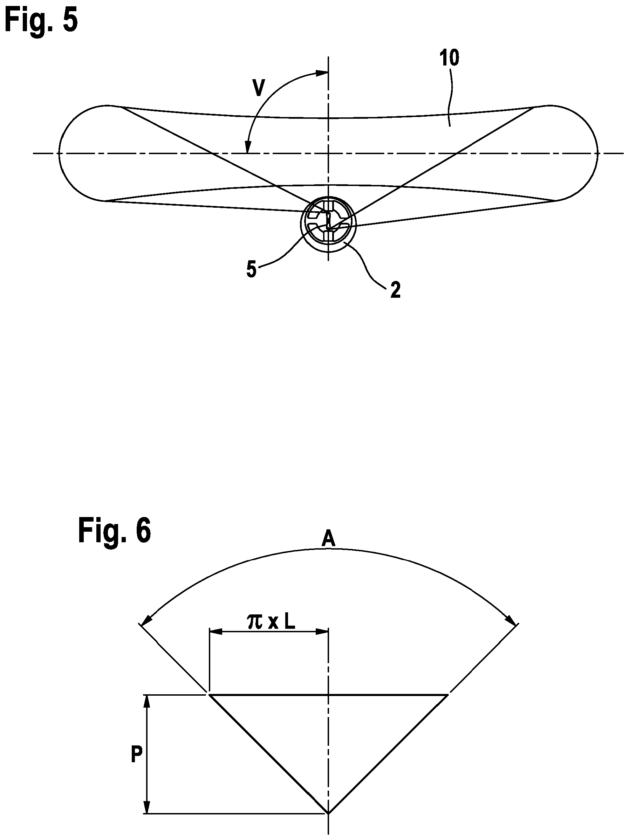

Fig.5
Der Querschnitt beziehungsweise das Sprühbild des Sprühstrahls 10 entspricht wie bereits vorstehend beschrieben dem skalierten Kanalquerschnitt 6, ist jedoch im Aufprallbereich 11 aufgrund der tangentialen Ausstoßrichtung in Relation zur Auslassöffnung 5 um die Kanalachse K um einen Verdrehungswinkel V verdreht. Fig.5 verdeutlicht diesen Effekt am Beispiel einer besonders praxisoptimierten Auslegung mit dem Verdrehungswinkel V von 90°.

Der Verdrehungswinkel V ist im Wesentlichen proportional zu Steigung P des Kanals 3. In der Praxis ist es jedoch aufgrund von spezifischen Strömungseffekten mit einer Abweichung von etwa 10 bis 20% zu rechnen, welche den tatsächlichen Verdrehungswinkels gegenüber seiner theoretischen Auslegung verringert.

Fig.6
Der theoretische Öffnungswinkel beziehungsweise Ausbreitungswinkel A des Sprühstrahls 10 lässt sich einfach aus den bekannten Querschnittsbreite L und der Steigung P gemäß nachfolgender Formel ableiten: $A = 2 ∗ arctg \left(π∗\frac{L}{P}\right)$

In der Praxis sind beim tatsächlichen Ausbreitungswinkel A Abweichungen von seinem theoretischen Wert möglich, fallen jedoch meist sehr gering aus.

Das vorstehend beschriebene erfindungsgemäße Aufbauprinzip des schraubförmigen Kanals bleibt nicht auf das vorstehend beschriebene Anwendungsbeispiel einer Spritzdüse für eine fahrzeuginterne Reinigungsvorrichtung beschränkt und kann beispielsweise auch in der Industrie oder anderen Bereichen für Anwendungsszenarien verwendet werden, wenn ein Fluid, insbesondere Flüssigkeit, mit einem definierten Sprühbild und einer laminaren Strömungscharakteristik verteilt werden soll.

### Bezugszeichenliste

- 1: Spritzdüse
- 2: Düsenkörper
- 3: Kanal
- 4: Einlassöffnung
- 5: Auslassöffnung
- 6: Kanalquerschnitt
- 7: Gehäuse
- 8: Anschlussstutzen
- 9: Zulauf
- 10: Sprühstrahl
- 11: Aufprallbereich
- 12: Oberfläche
- A: Ausbreitungswinkel
- B: Sprührichtung
- K: Kanalachse
- L: Querschnittsbreite
- P: Steigung
- S: Symmetrieachse
- V: Verdrehungswinkel
- W: Querschnittshöhe

## Patentansprüche

1. Spritzdüse (1), für eine Reinigungsvorrichtung in einem Fahrzeug, umfassend wenigstens einen Düsenkörper (2) aus einem thermoplastischen Kunststoff mit wenigstens einem Kanal (3), wobei der Kanal (3) sich zwischen einer Einlassöffnung (4) und einer Auslassöffnung (5) erstreckt und zum Formen eines Sprühstrahls (4) aus einem Reinigungsfluid vorgesehen ist, welcher aus der Auslassöffnung (4) ausgestoßen wird **dadurch gekennzeichnet, dass** der Kanal (3) zumindest in seinem der Auslassöffnung (5) angrenzendem Abschnitt entlang einer Kanalachse (K) mit einer definierten Steigung (P) schraubenförmig gedreht ausgebildet ist, wobei ein Kanalquerschnitt (6) des Kanals (3) langgestreckt mit einer definierten Querschnittsbreite (L) und einer definierten Querschnittshöhe (W) ausgebildet ist und wobei die Querschnittsbreite (L) größer als Querschnittshöhe (W) ist und wobei der Kanalquerschnitt (6) eckenlos verrundet im Wesentlichen als ein eingedrücktes Oval ausgebildet ist.

2. Spritzdüse (1) nach Anspruch 1 **dadurch gekennzeichnet, dass** das Verhältnis von Querschnittshöhe zu Querschnittsbreite(W/L) im Bereich des schraubenförmig gedrehten Abschnitts des Kanals (3) konstant ist.

3. Spritzdüse (1) nach Anspruch2 **dadurch gekennzeichnet, dass** das Verhältnis von Querschnittshöhe zu Querschnittsbreite (W/L) an der Einlassöffnung (4) größer ist als an der Auslassöffnung (5).

4. Spritzdüse (1) nach wenigstens einem der vorstehenden Ansprüche
**dadurch gekennzeichnet, dass** eine Fläche des Kanalquerschnitts (6) an der Einlassöffnung (4) größer als an der Auslassöffnung (5) ist.

5. Spritzdüse (1) nach Anspruch4 **dadurch gekennzeichnet, dass** die Fläche des Kanalquerschnitts (6) im Bereich des schraubenförmig gedrehten Abschnitts des Kanals (3) sich in Richtung Auslassöffnung (5) stätig verringert.

6. Spritzdüse (1) nach wenigstens einem der vorstehenden Ansprüche
**dadurch gekennzeichnet, dass** der Kanalquerschnitt (6) mit zwei orthogonalen Symmetrieachsen (S1, S2) ausgebildet ist, insbesondere im Wesentlichen als eine Cassinische Kurve .

7. Spritzdüse (1) nach wenigstens einem der vorstehenden Ansprüche
**dadurch gekennzeichnet, dass** der Düsenkörper (2) in einem Gehäuse (7) in Bezug zu wenigstens einer Raumachse verstellbar angeordnet ist.

8. Spritzdüse (1) nach Anspruch 7 **dadurch gekennzeichnet, dass** der Düsenkörper (2) relativ zum Gehäuse (7) verstellbar angeordnet ist.

9. Reinigungsvorrichtung umfassend wenigstens eine Spritzdüse (1) nach wenigstens einem der vorstehenden Ansprüche.

## Claims

1. A spray nozzle (1) for a cleaning device in a vehicle, comprising at least one nozzle body (2) made of a thermoplastic material having at least one channel (3), wherein the channel (3) extends between an inlet opening (4) and an outlet opening (5) and is provided to form a spray jet (4) of a cleaning fluid, which is ejected from the outlet opening (4), **characterized in that** the channel (3) is formed helically twisted at least in its portion adjacent to the outlet opening (5) along a channel axis (K) having a defined pitch (P), wherein a channel cross section (6) of the channel (3) is formed elongated having a defined cross-sectional width (L) and a defined cross-sectional height (W), and wherein the cross-sectional width (L) is greater than the cross-sectional height (W), and wherein the channel cross section (6) is formed rounded without corners, substantially as an indented oval.

2. The spray nozzle (1) according to claim 1, **characterized in that** the ratio of cross-sectional height to cross-sectional width (W/L) is constant in the region of the helically twisted portion of the channel (3).

3. The spray nozzle (1) according to claim 2, **characterized in that** the ratio of cross-sectional height to cross-sectional width (W/L) is greater at the inlet opening (4) than at the outlet opening (5).

4. The spray nozzle (1) according to at least one of the preceding claims,
**characterized in that** an area of the channel cross section (6) is larger at the inlet opening (4) than at the outlet opening (5).

5. The spray nozzle (1) according to claim 4, **characterized in that** the area of the channel cross section (6) continuously decreases in the direction of the outlet opening (5) in the region of the helically twisted portion of the channel (3).

6. The spray nozzle (1) according to at least one of the preceding claims,
**characterized in that** the channel cross section (6) is formed having two orthogonal axes of symmetry (S1, S2), in particular substantially as a Cassini curve.

7. The spray nozzle (1) according to at least one of the preceding claims,
**characterized in that** the nozzle body (2) is arranged in a housing (7) to be adjustable in relation to at least one spatial axis.

8. The spray nozzle (1) according to claim 7, **characterized in that** the nozzle body (2) is arranged to be adjustable relative to the housing (7).

9. A cleaning device comprising at least one spray nozzle (1) according to at least one of the preceding claims.

## Revendications

1. Buse de pulvérisation (1) pour un dispositif de nettoyage dans un véhicule, comprenant au moins un corps de buse (2) en matériau thermoplastique avec au moins un canal (3), dans laquelle le canal (3) s'étend entre une ouverture d'entrée (4) et une ouverture de sortie (5) et est conçu pour former un jet de pulvérisation (4) d'un fluide de nettoyage, qui est éjecté de l'ouverture de sortie (4), **caractérisée en ce que** le canal (3) est de forme hélicoïdale au moins dans sa section adjacente à l'ouverture de sortie (5) le long d'un axe de canal (K) avec un pas défini (P), dans laquelle une section transversale de canal (6) du canal (3) est allongée avec une largeur transversale (L) et une hauteur transversale (W) définies, et dans laquelle la largeur transversale (L) est supérieure à la hauteur transversale (W), et dans laquelle la section transversale de canal (6) est arrondie sans angles, réalisée essentiellement sous la forme d'un ovale enfoncé.

2. Buse de pulvérisation (1) selon la revendication 1, **caractérisée en ce que** le rapport de la hauteur de section transversale à la largeur de section transversale (W/L) est constant dans la zone de la section hélicoïdale du canal (3).

3. Buse de pulvérisation (1) selon la revendication 2, **caractérisée en ce que** le rapport de la hauteur de section transversale à la largeur de section transversale (W/L) à l'ouverture d'entrée (4) est supérieur à celui à l'ouverture de sortie (5).

4. Buse de pulvérisation (1) selon au moins l'une des revendications précédentes, **caractérisée en ce qu'**une surface de la section transversale de canal (6) à l'ouverture d'entrée (4) est plus grande qu'à l'ouverture de sortie (5).

5. Buse de pulvérisation (1) selon la revendication 4, **caractérisée en ce que** la surface de la section transversale de canal (6) dans la zone de la section hélicoïdale du canal (3) diminue continuellement dans la direction de l'ouverture de sortie (5).

6. Buse de pulvérisation (1) selon au moins l'une des revendications précédentes, **caractérisée en ce que** la section transversale de canal (6) est réalisée avec deux axes de symétrie orthogonaux (S1, S2), en particulier essentiellement comme une courbe de Cassini.

7. Buse de pulvérisation (1) selon au moins l'une des revendications précédentes, **caractérisée en ce que** le corps de buse (2) est disposé de manière réglable dans un boîtier (7) par rapport à au moins un axe spatial.

8. Buse de pulvérisation (1) selon la revendication 7 **caractérisée en ce que** le corps de buse (2) est disposé de manière réglable par rapport au boîtier (7).

9. Dispositif de nettoyage comprenant au moins une buse de pulvérisation (1) selon au moins l'une des revendications précédentes.
